# EUROPÄISCHE PATENTSCHRIFT

(11) **EP 1 349 223 B1**
(45) Veröffentlichungstag und Bekanntmachung des Hinweises auf die Patenterteilung: **06.08.2008**
(21) Anmeldenummer: 02004943.3
(22) Anmeldetag: 05.03.2002
(51) Int. Cl.: H01M 8/00, H01M 2/10

(54) **Mobile Vorrichtung zur Energieversorgung mit Brennstoffzellen**
Mobile power supply system with a fuel cell
Dispositif mobile d'alimentation électrique par des piles à combustible

(43) Veröffentlichungstag der Anmeldung: 01.10.2003
(73) Patentinhaber: SFC Smart Fuel Cell AG, 85649 Brunnthal-Nord (DE)
(72) Erfinder: FREITAG, Oliver, 81667 München (DE); MÜLLER, Dr. Jens, 81827 München (DE); STEFENER, Dr. Manfred, 80538 München (DE)
(74) Vertreter: Grünecker, Kinkeldey, Stockmair & Schwanhäusser Anwaltssozietät

(56) Entgegenhaltungen:
- EP-A- 0 911 895
- JP-A- 9 171 842
- US-A- 5 314 762
- US-A- 5 858 568
- US-B1- 6 326 097

## Beschreibung

### Stand der Technik

Nicht zuletzt wegen der zunehmenden Mobilität der Gesellschaft und insbesondere der Geschäftswelt besteht ein hoher und ständig wachsender Bedarf an elektrischen Geräten, deren Strombedarf ganz oder vorübergehend netzunabhängig gedeckt werden kann.

Das enorm weite Feld für den Einsatz netzunabhängiger Stromversorgung soll durch die nachfolgende exemplarische Auswahl von Einsatzgebieten verdeutlicht werden, die weit davon entfernt ist, erschöpfend zu sein:

Camping- und Caravan, Open-Air-Veranstaltungen, Filmdreharbeiten (speziell Außenaufnahmen), Vermessungswesen, Unterwasserarbeiten, Technische Hilfsdienste (Naturkatastrophen), Untertagebau, Feldlabors (bspw. meteorologische Stationen), Militär, Zivil- und Militärluftfahrt (bspw. unbemannte Aufklärungsflugzeuge und Wetterballons), Raumfahrt, und zahlreichen Sport- und Extremsportarten wie Segeln, Segelflug, Ballonfahrt.

Bekannte Beispiele für batteriebetriebene Elektrogeräte sind: Unterhaltungselektronik ("Walkman"), Mobiltelefone, Satellitentelefone, Filmkameras, Laptops, Akkubetriebene Werkzeuge wie Bohrer, etc.

In vielen Einsatzgebieten ist eine permanente Stromversorgung per Netz wegen zu starker Einschränkung der Mobilität oder ganz fehlenden Zugangs nicht möglich, in anderen wieder zu gefährlich, beispielsweise unter Wasser.

Herkömmlicherweise erfolgt in den oben genannten Fällen die Stromversorgung durch wiederaufladbare Batterien, sogenannte Sekundärelemente, die im täglichen Sprachgebrauch meist als Akkumulatoren oder kurz als Akkus bezeichnet werden.

Solche Akkus haben zwei wesentliche Nachteile:

Zum einen erfolgt das Aufladen der Akkumulatoren in der Regel über ein netzbetriebenes Ladegerät. Obwohl in vielen Fällen der Akku nicht mehr ausgebaut werden muss, ist man letztendlich doch wieder vom Stromnetz abhängig, wobei die Aufladedauer oft erheblich länger als die Entladedauer des Akkus ist.

Zum anderen ist die Laufzeit von elektronischen Geräten mit Akkus in der Regel auf wenige Stunden begrenzt. Beispielsweise liegt sie zur Zeit bei Notebooks und Mobiltelefonen im Bereich von wenigen Stunden. Darüber hinaus ist ein weiteres Problem von Akkus, dass sie sich auch ohne Stromentnahme innerhalb weniger Wochen entleeren.

Die meisten dieser Nachteile treten bei der Stromversorgung mit Brennstoffzellen nicht auf. Allerdings sind die meisten der handelsüblichen elektrischen Geräte auf den Batterie-/Akkubetrieb ausgelegt und können nicht ohne unverhältnismäßig hohen Aufwand auf internen Brennstoffzellenbetrieb umgerüstet werden. Die Alternative, nämlich die Stromversorgung durch eine externe Brennstoffzelle, wird dagegen für die meisten Anwendungen als praxisuntauglich angesehen, da die Verwendung eines elektrischen Geräts mit einer separaten Stromversorgung in der Regel die Handlichkeit herabsetzen und damit letztendlich auch die Akzeptanz derartiger kombinierter Systeme verringern würde.

Die Dokumente JP 09 171842 A, EP-A-0 911 895 und US-A-5 314 762 offenbaren mobile Energieversorgungsvorrichtungen in Koffer- oder Truhenform beinhaltend eine Brennstoffzellenvorrichtung, einen oder mehrere Brennstofftanks, sowie wenigstens einen elektrischen Verbraucher der mobilen Energieversorgungsvorrichtung selbst, wie z.B. Steuereinrichtungen, Pumpen, Ventilatoren, Sensoren, etc.

### Beschreibung der Erfindung

Es ist eine Aufgabe der vorliegenden Erfindung, Vorrichtungen bereitzustellen, mit denen die oben genannten Nachteile netzunabhängiger Energieversorgung vermieden werden können.

Diese Aufgabe wird erfindüngsgemäß durch das System mit den Merkmalen des Anspruchs 1, und das mobile Energieversorgungssystem mit den Merkmalen des Anspruchs 11 gelöst.

Beim Gehäuse ist wenigstens ein Gehäuseabschnitt zur Aufnahme wenigstens einer Brennstoffzellenvorrichtung eingerichtet, wenigstens ein Gehäuseabschnitt zur Aufnahme wenigstens eines elektrischen Verbrauchers eingerichtet, und wenigstens ein Gehäuseabschnitt für den Einbau eines Brennstofftanks oder den Einsatz einer auswechselbaren Brennstoffpatrone eingerichtet.

Somit können elektrische Verbraucher, Energieversorgungsvorrichtung und Brennstoffvorrat innerhalb eines Gehäuses transportiert, mit Strom versorgt, und wenigstens zum Teil auch innerhalb des Gehäuses verwendet werden. Insbesondere können die Akkus akkubetriebener Verbraucher netzunabhängig und ohne Verlust der Mobilität aufgeladen werden.

Bei Verwendung von Brennstoffpatronen ist im Gehäuse zweckmäßigerweise eine geeignete Schnittstelle vorgesehen, die deren Anschluss und Austausch vergleichbar einfach, sicher und bediendungsfreundlich macht wie den Ein- und Ausbau einer Batterie. Diese Weiterbildung garantiert eine höchstmögliche Mobilität. Falls ein die Kapazität einer Patrone übersteigender Dauerbetrieb erwünscht ist, kann entweder ein Reservetank vorgesehen werden, der die Vorrichtung während der Zeit des Austauschs mit Brennstoff versorgt, oder es können Anschlüsse für mehrere (wenigstens zwei) Patronen vorgesehen werden, so dass die Brennstoffversorgung im Fall einer entleerten Patrone durch eine oder mehrere nicht entleerte Patronen aufrecht erhalten wird.

Bei der zuletzt beschriebenen Weiterbildung ist ein externer Anschluss zu Brennstoffversorgung nicht erforderlich. Für Vorrichtungen, die vergleichsweise stationär betrieben werden und voraussehbar selten bewegt werden, kann es aber zweckmäßig sein, dass die Brennstoffversorgung vorwiegend extern erfolgt und eine austauschbare Patrone oder ein befüllbarer Tank nur zur Überbrücken und/oder zum Gewährleisten einer höheren Mobilität dienen.

Für diesen Fall ist eine Weiterbildung vorgesehen, bei der das Gehäuse einen Anschluss zur externen Zufuhr von Brennstoff umfasst. Dieser kann sowohl zur Direktversorgung der Brennstoffzelle, zur Überbrückung während des Austauschs einer Brennstoffpatrone, als auch zum Befüllen des Tanks verwendet werden. Diese Weiterbildung ist vor allem dann bevorzugt, wenn eine gute Infrastruktur für die Brennstoffversorgung zur Verfügung steht, da in diesem Fall der Brennstoffvorrat nicht mitgeführt werden muss bzw. der mitgeführte Brennstoffvorrat für solche Situationen aufgespart werden kann, in denen keine externe Zufuhr möglich ist. Beispielsweise können in Wasserstoff- oder Methanolbetriebenen Fahrzeugen problemlos im Fahrgastraum zusätzliche Anschlüsse zur Entnahme von Brennstoff bereitgestellt werden.

Diese Weiterbildung ist auch dann vorteilhaft, wenn die Mitführung von eigenem Brennstoff auf Grund von Sicherheitsüberlegungen bedenklich ist. Auch für Vorrichtungen, die ohne Unterbrechung über sehr lange Zeitdauern netzunabhängig und ohne Wartung betrieben werden müssen (beispielsweise Feldlabors), ist es zweckmäßiger, die Brennstoffversorgung über einen angeschlossenen großen externen Tank zu gewährleisten, als einen großen Vorrat innerhalb der mobilen Energieversorgungsvorrichtung bereitzustellen. Eine allein intern vorgesehener Brennstoffvorrat würde bei Langzeitbetrieb die Ausmaße der Vorrichtung maßgeblich bestimmen, was ab einem gewissen erforderlichen Vorrat nur auf Kosten der Mobilität der gesamten Vorrichtung zu erreichen wäre.

In einer besonders bevorzugten Weiterbildung weist das Gehäuse wenigstens einen Steckplatz zur Halterung eines elektrischen Verbrauchers auf. Bevorzugt ist der Steckplatz im Gehäuseinneren vorgesehen, so dass angeschlossene Geräte problemlos zusammen mit der Vorrichtung und durch deren Gehäuse geschützt transportierbar sind. Allerdings kann es auch zweckmäßig sein, Steckplätze an der Gehäuseaußenseite vorzusehen, was besonders für Kleingeräte keine Probleme bereitet.

Obwohl der elektrische Anschluss von Verbrauchern direkt an entsprechenden Ausgängen der Brennstoffzelle erfolgen könnte, ist es vorteilhaft, im Gehäuse eine elektrische Schnittstelleneinrichtung vorzusehen, die einerseits mit der Brennstoffzelle (oder den Brennstoffzellen) verbunden wird, und auf der anderen Seite den Anschluss des wenigstens einen elektrischen Verbrauchers ermöglicht.

In einer vorteilhaften Weiterbildung sind die Steckplätze integral mit einer zugehörigen elektrischen Schnittstelle ausgebildet, so dass der mechanische Anschluss eines Elektrogeräts gleichzeitig auch eine elektrische Verbindung bewirkt. Dies erhöht die Bedienungsfreundlichkeit der erfindungsgemäßen Vorrichtung beträchtlich und reduziert gleichzeitig die Möglichkeit von Bedienungsfehlern.

Vorzugsweise umfasst das Gehäuse ein aktives Sicherheitssystem und/oder ein aktives Schließsystem, die dem Diebstahlsschutz diesen bzw. den Zugang zum Inneren des Gehäuses auf autorisierte Personen einschränken. Derartige Systeme sind aus der Technik bekannt, können aber in der erfindungsgemäßen Vorrichtung besonders vorteilhaft eingesetzt werden, da sie keine eigens vorzusehende Stromversorgung benötigen, sondern durch die von der (den) eingebauten Brennstoffzelle(n) selbst mit Energie versorgt werden können.

Die Formen für das Gehäuse sind Koffer- oder Truhenform. Sie können leicht von einer Person (oder wenigen Personen) getragen werden, platzsparend gestaltet und standfest ausgebildet sein, und gegebenenfalls mit Rädern zur Transporterleichterung versehen sein. Viele der zu versorgenden Geräte können innerhalb des Koffers oder der Truhe mitgeführt werden und, falls notwendig, mit wenigen einfachen wenigen Handgriffen entnommen werden.

In einer besonders bevorzugten Weiterbildung weist das Gehäuse zusätzlich elektrische Schnittstellen an der Außenseite des Gehäuses auf. Diese Schnittstellen können einfache Anschlussbuchsen (zur Stromentnahme), gegebenenfalls aber auch mechanische Steckplätze mit elektrischen Anschlusskontakten sein.

Im Fall der Anschlussbuchsen können externe Verbraucher mittels Stromkabel angeschlossen werden. Im zweiten Fall sind diese nicht erforderlich, was insbesondere für häufig benötigte Kleingeräte wie Handys vorteilhaft ist.

Eine vorteilhafte Weiterbildung des Systems umfasst eine Steuereinrichtung, beispielsweise einen Mikroprozessor, zur Steuerung der Stromversorgung von angeschlossenen Verbrauchern. Diese Steuereinrichtung ist so ausgebildet (programmiert), dass sie ein intelligentes Power-Management ermöglicht, das die Betriebszustände von angeschlossenen Geräte erkennt und entsprechend einer vorgebbaren Hierarchie die Stromversorgung dieser Geräte steuert.

In der erfindungsgemäßen System wird bevorzugt eine Direktmethanolbrennstoffzelle verwendet. Diese hat zahlreiche Vorteile gegenüber anderen gängigen Brennstoffzellentypen, die hier nicht im Einzelnen aufgeführt werden müssen. Gegenüber der konkurrierenden Wasserstofftechnologie seien vor allem die hohe Speicherdichte und das niedrigere Gefahrenpotential (Explosionsgefahr von Wasserstoff) von Methanol genannt.

In vielen Fällen ist neben der Mobilität die unbedingte Zuverlässigkeit der Energieversorgung ein dringendes Bedürfnis. Da bei Brennstoffzellenvorrichtungen Fluidströme auftreten, die mehr (im Fall von Flüssigkeiten) oder weniger (im Fall von Gasen) von einer von außen einwirkenden Beschleunigung und speziell von der Richtung der Schwerkraftwirkung abhängen, kann es bestimmte Orientierungen der Brennstoffzellenvorrichtung geben, in den sie nicht oder nur eingeschränkt funktionsfähig ist. Dies kann für eine mobile Energieversorgungsvorrichtung natürlich ein ernsthaftes Problem sein, insbesondere in Einsatzgebieten, in denen sich die Gehäuselage oft und unvorhersehbar ändert und/oder sich ändernde äußere Kräfte auftreten.

Daher ist für solche Einsatzzwecke die mobile Energieversorgungsvorrichtung so einzurichten, dass sie bei allen oder wenigstens bei allen wahrscheinlichen Gehäuselagen (die wahrscheinlichen Gehäuselagen sind Vorzugslagen, die durch die Form des Gehäuses und den Schwerpunkt der gesamten Vorrichtung vorgegeben werden können) funktionsfähig bleibt.

Es werden daher für derartige Einsatzzwecke vorteilhafte Weiterbildungen des Systems bereitgestellt, bei welchen das Gehäuse so ausgebildet und die wenigstens eine Brennstoffzellenvorrichtung in dem Gehäuse so angeordnet ist, dass die Funktionsfähigkeit der wenigstens einen Brennstoffzellenvorrichtung in wenigstens einer stabilen Vorzugslage des Gehäuses gewährleistet ist, oder die wenigstens eine Brennstoffzellenvorrichtung in dem Gehäuse so angeordnet ist, dass sie eine von der Lage des Gehäuses abhängige Orientierung einnimmt, die ihre Funktionsfähigkeit in jeder Lage des Gehäuses gewährleistet, oder mehrere Brennstoffzellenvorrichtungen in dem Gehäuse so angeordnet sind, dass in jeder Lage des Gehäuses die Funktionsfähigkeit wenigsten einer Brennstoffzellenvorrichtung gewährleistet ist.

Die Erfindung stellt ferner eine mobiles Energieversorgungssystem bereit, dass aus wenigstens einem der oben beschriebenen Systeme und wenigstens einer Verteilungsvorrichtung zum Anschluss elektrischer Verbraucher besteht, wobei die Verteilungsvorrichtung über eine externe Leitung mit einer elektrischen Schnittstelle des wenigstens einen Systems verbunden ist.

So kann das System beispielsweise aus einer erfindungsgemäßen mobilen Energieversorgungsvorrichtung bestehen, dass ausschließlich der Energieversorgung dient, während die an die an die Energieversorgungsvorrichtung angeschlossen Verteilungsvorrichtung ausschließlich der Aufnahme und/oder Stromversorgung von Verbrauchern dient.

Zur weiteren Erläuterung der Erfindung werden im Folgenden bevorzugte Ausführungsformen der vorliegenden Erfindung unter Bezugnahme auf die beigefügten Figuren beschrieben.

### Es zeigen:

- Figur 1: eine truhenförmig ausgebildete mobile Energieversorgungsvorrichtung;
- Figur 2: eine kofferförmig ausgebildete mobile Energieversorgungsvorrichtung;
- Figur 3: ein Koffersystem.

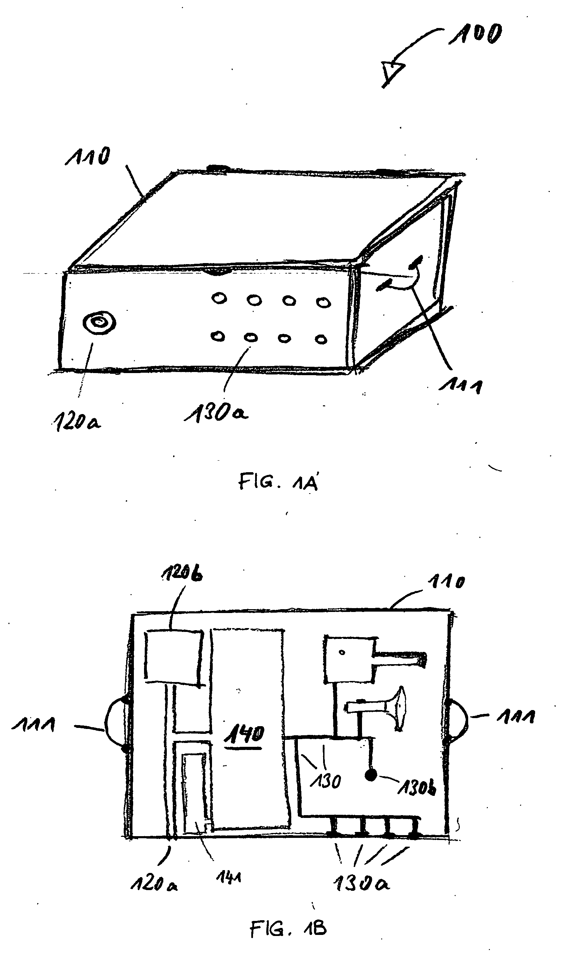

Die Figuren 1A und 1B zeigen ein erstes bevorzugtes Ausführungsbeispiel der erfindungsgemäßen mobilen Vorrichtung zur Energieversorgung 100.

Die Vorrichtung weist ein truhenartiges Gehäuse 110 auf, an dem seitliche, ausklappbare Tragegriffe 111 vorgesehen sind. Das Gehäuse 110 hat einen aufklappbaren Deckel, der Zugriff auf das Truheninnere ermöglicht. An der Vorderseite der Truhe ist außen ein Anschlussstutzen 120a zur Brennstoffversorgung der im Inneren der Truhe fest installierten Brennstoffzelle 140 vorgesehen. Dieser Anschlussstutzen 120a ist mit einem Rückschlagventil oder einer anderen Verschlussseinrichtung versehen, so dass kein Austreten von Brennstoff möglich ist.

An der Vorderseite der Truhe sind außen ferner mehrere Stromanschlussbuchsen 130a vorgesehen, zu denen Zuleitungen 130 von der Brennstoffzelle führen, um elektrische Verbraucher anschließen zu können.

Für verschiedene Ausgangsspannungen können jeweils separate Buchsen vorgesehen sein.

Zusätzlich oder alternativ können auch für eine bestimmte Spannung Buchsen 130a unterschiedlichen Typs vorgesehen sein, so dass für verschiedene gängige Stecker eine Steckverbindung ausgebildet werden kann.

Die in Figur 1B in Draufsicht gezeigte Innenansicht des Gehäuses 110 zeigt eine schematische Raumaufteilung, die lediglich der Veranschaulichung dient, aber nicht als maßstäblich missinterpretiert werden sollte.

Im Inneren der Truhe ist ein Einsteckplatz 120b für eine austauschbare Brennstoffpatrone vorgesehen. Mit eingesetzter Brennstoffpatrone kann die Vorrichtung 100 somit auch ohne externe Brennstoffzufuhr zur Energieversorgung verwendet werden.

In einer alternativen Ausführungsform kann anstelle des Einsteckplatzes 120b für eine austauschbare Brennstoffpatrone ein fest installierter Reservetank vorgesehen sein, der bei einer externen Brennstoffzufuhr automatisch befüllt wird und nach dem Beenden der externen Zufuhr für eine gewisse Zeitdauer die Betriebsfähigkeit der Vorrichtung aufrecht erhält.

Im Inneren der Truhe sind mehrere Steckplätze 130b vorgesehen, an denen akkubetriebene Verbraucher, im skizzierten Beispiel eine Kamera und ein Strahler, an speziell vorgesehenen oder standardisierten Einsteckplätzen einsteckbar sind. Diese Einsteckplätze sind so ausgebildet, dass die Geräte sicher gehaltert und gleichzeitig die in den Geräten vorgesehenen Akkus aufgeladen werden, ohne dass sie hierfür aus den Verbrauchern ausgebaut werden müssten.

Ferner ist eine optionale Vorrichtung 141 skizziert, die der Aufnahme oder der Filterung von Reaktionsprodukten der Brennstoffzelle 140 dient. Dies kann z.B. ein kleiner Tank zur Sammlung von Kondenswasser sein. Eine solche Vorrichtung ist nicht notwendig, wenn die Reaktionsprodukte problemlos an die Umgebung abgegeben werden können.

Der Einfachheit halber ist die Brennstoffzellenvorrichtung als eine einzige Brennstoffzelle 140 skizziert. Es versteht sich aber von selbst, dass der Begriff Brennstoffzellenvorrichtung auch Parallel- und Reihenverschaltungen mehrerer Einzelzellen oder von Brennstoffzellenstacks umfasst. Verschiedene solche Verschaltungen können vorteilhaft zur Bereitstellung unterschiedlicher Ausgangsspannungen an den Anschlüssen 130a, 130b gewählt werden, so dass keine elektronische Spannungskonvertierung notwendig ist.

Das Gehäuse ist gemäß den praktischen Anforderungen ausgebildet, wobei die gezeigte Lage der Anschlüsse etc. nur beispielhaft ist. Beispielsweise kann es auch vorteilhaft sein, wenn Anstelle eines scharniergelagerten Deckels kann auch ein durch Klemmschellen gesicherter, vollständig abnehmbarer Deckel vorgesehen sein. An der Außenseite des können Vorrichtungen wie Gewindebohrungen vorgesehen sein, die ein zuverlässiges Befestigen des Gehäuses in einem Laborregal, in einem Fahrzeug oder auf einem Boot, etc. ermöglichen. Das Gehäuse kann ferner mit Bodenrollen ausgestattet sein, die auf ebenem Untergrund ein Verschieben der gesamten Vorrichtung zulassen.

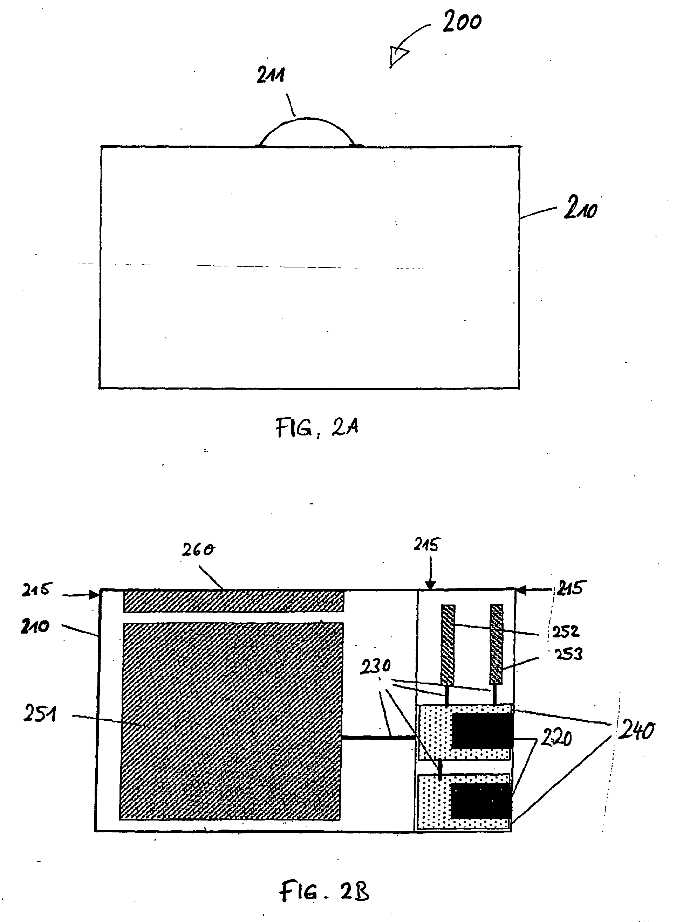

Eine weitere, besonders bevorzugte Anwendung der Erfindung ist in Aufsicht und Schnittansicht in den Figuren 2A und 2B veranschaulicht: Hier ist die erfindungsgemäße Vorrichtung zur Energieversorgung 200 als "Business-Koffer" ausgeführt, in den ein Mobile-Office System integriert ist.

In den Figuren 2A und 2B haben Merkmale, die gleiche oder vergleichbare Funktion wie entsprechende Merkmale der Ausführungsform der Figuren 1A und 1B, um Einhundert erhöhte Bezugszeichen. So bezeichnet das Bezugszeichen 210 das Koffergehäuse, 211 den Tragegriff, etc.

Im Koffergehäuse 210 sind neben fest installierten Brennstoffzellenvorrichtungen 240 austauschbare Brennstoffpatronen 220 zu deren Brennstoffversorgung vorgesehen.

Zur Sauerstoffversorgung der Brennstoffzelle(n) sind in der Kofferwand Öffnungen 215 (beispielsweise Schlitze oder Löcher) vorgesehen, die eine Luftzufuhr zur Brennstoffzelle ermöglichen. Ventilatoren, die mit dem erzeugten Strom betrieben werden, können die Luftzufuhr unterstützen. Die Öffnungen 215 sind gegen Verunreinigung der zugeführten Luft geschützt (beispielsweise durch Filter), und so angeordnet, dass eine Verstopfung von Öffnungen unwahrscheinlich ist und insbesondere eine gleichzeitige Verstopfung aller Öffnungen möglichst ausgeschlossen werden kann, so dass die Funktion von verstopften Öffnungen problemlos durch die noch funktionsfähigen übernommen werden kann.

Vorzugsweise ist der Innenraum des Koffers nach außen hin hermetisch abgeschlossen, so dass bei einem Defekt austretender Brennstoff nicht an die Umwelt gelangt.

Da die Funktionsfähigkeit einer Brennstoffzellenvorrichtung in der Regel von deren Lage bezüglich der Schwerkraftwirkung abhängt, ist es zweckmäßig, die äußere Form des Koffergehäuses so auszubilden, dass der Koffer nicht ohne weiteres in einer Lage abgestellt werden kann, in der die Funktion der Brennstoffzellenvorrichtung(en) beeinträchtigt ist. Dies kann durch geeignete Wahl des Schwerpunkts, durch Rundungen, etc. erreicht werden.

Alternativ können mehrere Brennstoffzellenvorrichtungen so im Koffer angeordnet werden, dass in jeder Lage oder zumindest in jeder plausiblen Lage wenigstens eine Brennstoffzellenvorrichtung betriebsfähig ist. Gleichzeitig können diese Brennstoffzellenvorrichtungen so durch eine Steuereinrichtung gesteuert werden, dass in jeder Lage genau eine Brennstoffzellenvorrichtung im Betrieb ist.

Darüber hinaus kann ein elektrisches Sicherheitssystem 260 integriert werden, das ebenfalls über die Brennstoffzelle(n) mit Energie versorgt werden kann. Dieses kann so ausgebildet sein, dass im Fall eines Diebstahls der Koffer geortet und/oder ein Alarm ausgelöst werden kann werden kann, oder der Inhalt oder Teile des Inhalts unbrauchbar gemacht werden können. Alternativ oder zusätzlich kann ein aktives Schließsystem integriert werden, das es dem Benutzer ermöglicht, den Koffer ohne Schlüssel oder Zahlenkombination zu öffnen (Keyless-Open/Keyless-Go). Wie das elektrische Sicherheitssystem 260 wird auch das aktive Schließsystem über die Brennstoffzelle(n) mit Energie versorgt.

Je nach Ausführung und Einsatzgebiet kann es zweckmäßig sein, die Vorrichtung so auszubilden, dass die zur Versorgung der Brennstoffzelle vorgesehene(n), austauschbare(n) Brennstoffpatrone(n) bei geöffnetem oder bei geschlossenem Koffer ausgetauscht werden kann (können).

Darüber hinaus sind im Inneren des Koffers Steckplätze für diverse Bürogeräte wie Laptop 251, Mobiltelefon 252, Satellitentelefon 253 und andere - nicht skizzierte Vorrichtungen - wie Videokamera, Digitalkamera, Drucker, Fax, PDA, Diktiergerät, Rundfunk- und/oder Fernsehempfangseinrichtungen, , Navigationsgeräte vorgesehen.

Die Brennstoffzellenvorrichtungen 240 können dazu verwendet werden, um die angeschlossenen Geräte direkt mit Energie zu betreiben oder um deren Akkus aufzuladen.

In einer besonders vorteilhaften Ausführung weist der Koffer eine Steuereinrichtung mit einem intelligenten Power-Management auf, das die Betriebs- und/oder Ladezustände der angeschlossenen Geräte feststellen und die Stromversorgung entsprechend dieser Zustände steuert. Falls gewünscht, kann hierfür eine Hierarchie unter den angeschlossenen oder anschließbaren Geräte vorgegeben werden.

Die Steckplätze zur mechanischen Halterung können elektrische Schnittstellen umfassen, so dass der Kontakt zwischen Gerät und Stromversorgung bei der Positionierung des Geräts im Koffer geschlossen wird.

Zusätzlich oder alternativ zu elektrischen Schnittstellen an den Steckplätzen kann es vorteilhaft sein, dass der elektrische Anschluss über Kabelverbindungen erfolgen kann. Bevorzugt werden hierzu flexible Kabel verwendet, die ein Herausnehmen der angeschlossenen Geräte aus dem Koffer ermöglichen, ohne dass die Stromversorgung unterbrochen wird.

Eine weitere bevorzugte Ausbildung sieht Gerätesteckplätze auch an der Außenseite des Gehäuses vor. So kann beispielsweise in einer Desktop-Konfiguration ein Laptop mit einer mechanischen und elektrischen Schnittstelle an der Kofferaußenseite verbunden werden und in diesem Zustand genutzt werden. Eine mechanisch/elektrischer Steckplatz an der Außenseite ist auch für Geräte vorteilhaft, die schnell griffbereit sein müssen oder häufig verwendet werden, wie dies z.B. bei Mobiltelefonen der Fall sein kann.

Insbesondere können, wie schon beim Ausführungsbeispiel der Figuren 1A, 1B beschrieben, auch beim Business-Koffer 200 Anschlussbuchsen im Koffergehäuse 210 vorgesehen sein, die es - ohne den Koffer zu öffnen - erlauben, externe Verbraucher anzuschließen und mit Energie zu versorgen.

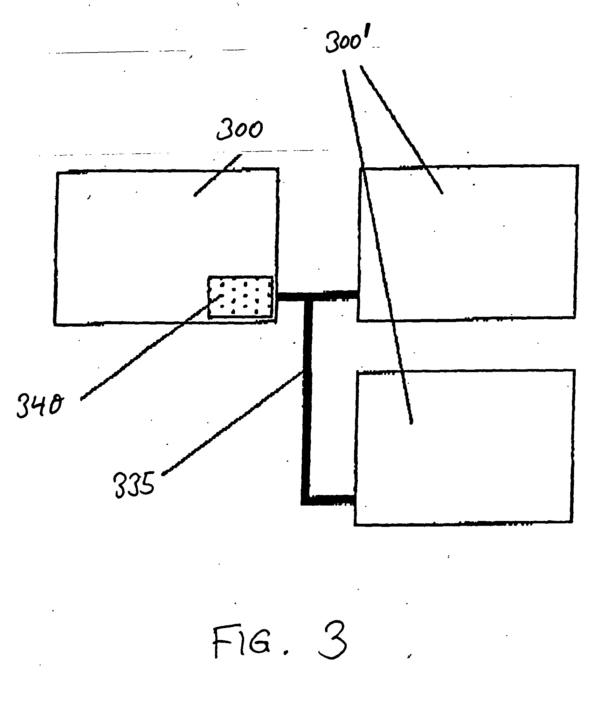

Eine derartige Ausführung erlaubt eine weitere vorteilhafte Anwendung der Erfindung, die in Figur 3 skizziert ist. Diese besteht darin, die erfindungsgemäßen Vorrichtungen 100, 200 zur Energieversorgung eines ganzen Koffersystems zu verwenden, das aus einer energieversorgenden Vorrichtung 300 (beispielsweise der Truhe von Fig. 1 oder dem Koffer von Fig. 2) und aus mehreren angeschlossenen Business-Koffern 300' besteht.

Diese Business-Koffer 300' unterscheiden sich von dem in den Figuren 2A, 2B illustrierten Business-Koffer 200 darin, dass sie keine eigene Brennstoffzellenvorrichtung 340 aufweisen (müssen) und über Verbindungsleitungen 335 durch die energieversorgende Vorrichtung 300 versorgt werden.

## Patentansprüche

1. System, umfassend:
wenigstens einen elektrischen Verbraucher aus der Gruppe bestehend aus Laptop, Mobiltelefon, Satellitentelefon, Videokamera, Digitalkamera, Drucker, Fax, PDA, Diktiergerät, Rundfunkempfangseinrichtung, Fernsehempfangseinrichtung, Navigationsgerät, akkubetriebenes Werkzeug, und Unterhaltungselektronikgerät;
ein tragbares Gehäuse (110; 210) in Kofferform (210) oder in Truhenform (110); in welchem
in wenigstens einem Gehäuseabschnitt wenigstens eine Brennstoffzellenvorrichtung (140; 240) aufgenommen ist,
in wenigstens einem Gehäuseabschnitt ein Brennstofftank eingebaut oder eine auswechselbare Brennstoffpatrone eingesetzt ist, und
in wenigstens einem Gehäuseabschnitt der wenigstens eine elektrische Verbraucher aufgenommen ist.

2. System nach Anspruch 1, worin das Gehäuse (110, 210) einen Anschluss (120a) für eine externe Zuführung von Brennstoff aufweist.

3. System nach einem der vorangegangenen Ansprüche, worin das Gehäuse (110. 210) wenigstens einen Steckplatz zur mechanischen Halterung des wenigstens einen elektrischen Verbrauchers aufweist.

4. System nach einem der vorangegangenen Ansprüche, worin das Gehäuse (110, 210) wenigstens eine elektrische Schnittstelle (130a, 130b) zum Anschluss des wenigstens einen elektrischen Verbrauchers aufweist.

5. System nach Anspruch 4 in Kombination mit Anspruch 3, worin die wenigstens eine elektrische Schnittstelle (130a, 130b) integral mit einem Steckplatz ausgebildet ist.

6. System nach einem der vorangegangenen Ansprüche, worin das Gehäuse (110, 210) ein aktives Sicherheitssystem und/oder ein aktives Schließsystem aufweist.

7. System nach einem der vorangegangenen Ansprüche, worin das Gehäuse (110, 210) wenigstens eine elektrische Schnittstelle (130a) an der Außenseite des Gehäuses (110, 210) aufweist.

8. System nach einem der vorangegangenen Ansprüche, weiterhin umfassend:
eine Steuereinrichtung zur Steuerung der Stromversorgung von angeschlossenen elektrischen Verbrauchern.

9. System nach einem der vorangegangenen Ansprüche, bei welchem wenigstens eine Brennstoffzellenvorrichtung eine Direktmethanolbrennstoffzelle umfasst.

10. System nach einem der vorangegangenen Ansprüche, bei welchem:
das Gehäuse (110, 210) so ausgebildet und die wenigstens eine Brennstoffzellenvorrichtung (140, 240) in dem Gehäuse so angeordnet ist, dass die Funktionsfähigkeit der wenigstens einen Brennstoffzellenvorrichtung (140, 240) in wenigstens einer stabilen Vorzugslage des Gehäuses (110, 210) gewährleistet ist, oder
die wenigstens eine Brennstoffzellenvorrichtung (140, 240) in dem Gehäuse (110, 210) so angeordnet ist, dass sie eine von der Lage des Gehäuses (110, 210) abhängige Orientierung einnimmt, die ihre Funktionsfähigkeit in jeder Lage des Gehäuses gewährleistet, oder
mehrere Brennstoffzellenvorrichtungen (140, 240) in dem Gehäuse (110, 210) so angeordnet sind, dass in jeder Lage des Gehäuses (110, 210) die Funktionsfähigkeit wenigstens einer Brennstoffzellenvorrichtung (140, 240) gewährleistet ist.

11. Mobiles Energieversorgungssystem, mit:
einem System nach einem der vorangegangenen Ansprüche, und
wenigstens einer Verteilungsvorrichtung (300') zum Anschluss elektrischer Verbraucher, wobei die Verteilungsvorrichtung (300') über eine externe Leitung (335) an einer elektrischen Schnittstelle des einen Systems anschließbar ist.

## Claims

1. A system comprising:
at least one electric consumer from the group consisting of laptop, mobile phone, satellite telephone, video camera, digital camera, printer, fax machine, PDAs, voice recorder, broadcast receiver, television receiver, navigation system, accumulator-driven tool and entertainment electronics;
a portable housing (110, 210) which is implemented in the form of a case (210) or a chest (110); in which
at least one fuel cell device (140, 240) is accommodated in at least one housing section,
a fuel tank is installed or a replaceable fuel cartridge is inserted in at least one housing section, and
the at least one electric consumer is accommodated in at least one housing section.

2. A system according to claim 1, wherein the housing (110, 210) has a connection (120a) for supplying fuel from outside.

3. A system according to one of the preceding claims, wherein the housing (110, 210) comprises at least one plug-in place for mechanically mounting the at least one electric consumer.

4. A system according to one of the preceding claims, wherein the housing (110, 210) comprises at least one electric interface (130a, 130b) for connection of the at least one electric consumer.

5. A system according to claim 4 in combination with claim 3, wherein the at least one electric interface (130a, 130b) is formed integrally with a plug-in place.

6. A system according to one of the preceding claims, wherein the housing (110, 210) comprises an active security system and/or an active lock system.

7. A system according to one of the preceding claims, wherein the housing (110, 210) comprises at least one electric interface (130a) on the outer surface of the housing (110,210).

8. A system according to one of the preceding claims, which further comprises:
a control means for controlling the power supply of electric consumers connected to said power supply device.

9. A system according to one of the preceding claims, wherein at least one fuel cell device comprises a direct methanol fuel cell.

10. A system according to one of the preceding claims, wherein:
the housing (110, 210) is implemented such and the at least one fuel cell device (140, 240) is arranged in said housing such that the operability of the at least one fuel cell device (140, 240) is guaranteed in at least one stable preferred position of said housing (110, 210), or wherein
the at least one fuel cell device (140, 240) is arranged in the housing (110, 210) in such a way that it occupies a position having an orientation which depends on the position of the housing (110, 210) and which guarantees the operability of said fuel cell device at any position of the housing, or wherein
a plurality of fuel cell devices (140, 240) is arranged in said housing (110, 210) such that the operability of at least one fuel cell device (140, 240) is guaranteed at any position of the housing (110, 210).

11. A mobile power supply system, comprising:
one system according to one of the preceding claims, and
at least one distribution unit (300') for connecting electric consumers, said distribution unit (300') being adapted to be connected to an electric interface of said one system via an external line (335).

## Revendications

1. Système comprenant
au moins un consommateur d'électricité provenant du groupe comprenant ordinateur portable, téléphone mobile, téléphone satellite, caméscope, appareil photo numérique, imprimante, télécopieur, PDA (assistant numérique personnel), dictaphone, dispositif récepteur radio, dispositif récepteur de télévision, appareil de navigation, outil fonctionnant sur accus et appareil électronique de divertissement ;
un boîtier (110 ; 210) portable sous forme de valise (210) ou sous forme de coffre (110) ; dans lequel
au moins un dispositif à cellules de combustible (140, 240) est incorporé dans au moins une partie de boîtier,
un réservoir de combustible est monté ou bien une cartouche de combustible amovible est installée dans au moins une partie de boîtier, et
au moins un consommateur d'électricité est incorporé dans au moins une partie de boîtier.

2. Système selon la revendication 1, dans lequel le boîtier (110, 210) présente un branchement (120a) pour une arrivée externe de combustible.

3. Système selon l'une quelconque des revendications précédentes, dans lequel le boîtier (110, 210) présente au moins un emplacement pour le support mécanique du au moins un consommateur d'électricité.

4. Système selon l'une quelconque des revendications précédentes, dans lequel le boîtier (110, 210) présente au moins une interface (130a, 130b) pour le raccordement du au moins un consommateur d'électricité.

5. Système selon la revendication 4 en combinaison avec la revendication 3, dans lequel la au moins une interface (130a, 130b) électrique est conçue intégrée avec un emplacement.

6. Système selon l'une quelconque des revendications précédentes, dans lequel le boîtier (110, 210) présente un système de sécurité actif et/ou un système de fermeture actif.

7. Système selon l'une quelconque des revendications précédentes, dans lequel le boîtier (110, 210) présente au moins une interface (130a) électrique sur le côté extérieur du boîtier (110, 210).

8. Système selon l'une quelconque des revendications précédentes, comprenant également :
un dispositif de commande pour la commande de l'alimentation électrique de consommateurs d'électricité raccordés.

9. Système selon l'une quelconque des revendications précédentes, sur lequel au moins un dispositif à cellules de combustible comporte une cellule de combustible à méthanol direct.

10. Système selon l'une quelconque des revendications précédentes,
sur lequel le boîtier (110, 210) est conçu et le au moins un dispositif à cellules de combustible (140, 240) est disposé dans le boîtier de telle sorte que le bon fonctionnement du au moins un dispositif à cellules de combustible (140, 240) est garanti dans au moins une position préférentielle stable du boîtier (110, 210), ou
le au moins un dispositif à cellules de combustible (140, 240) est disposé dans le boîtier (110, 210) de telle sorte qu'il occupe une orientation dépendante de la position du boîtier (110, 210) qui garantit son bon fonctionnement dans chaque position du boîtier, ou
plusieurs dispositifs à cellules de combustible (140, 240) sont disposés dans le boîtier (110, 210) de telle sorte que, dans chaque position du boîtier (110, 210), le bon fonctionnement d'au moins un dispositif à cellules de combustible (140, 240) est garanti.

11. Système mobile d'alimentation en énergie, comprenant
un système selon l'une quelconque des revendications précédentes, et
au moins un dispositif de répartition (300') pour le raccordement de consommateurs d'électricité, dans lequel le dispositif de répartition (300') peut être raccordé par une ligne (335) externe à une interface électrique d'un système.
